Europäisches Patentamt

European Patent Office

Office européen des brevets

(11) Publication number: **0 485 902 A1**

# EUROPEAN PATENT APPLICATION

(21) Application number: **91119068.4**

(22) Date of filing: **08.11.91**

(51) Int. Cl.5: **B23B 13/12**, B23B 31/12

(30) Priority: **12.11.90 IT 2201890**

(43) Date of publication of application:
**20.05.92 Bulletin 92/21**

(84) Designated Contracting States:
**DE FR GB SE**

(71) Applicant: **CUCCHI GIOVANNI & C. S.r.l.**
**Via Genova, 4**
**I-20060 Bussero Milano(IT)**

(72) Inventor: **Cucchi, Giovanni**
**Via Genova 4**
**I-20060 Bussero (Milano)(IT)**

(74) Representative: **Coloberti, Luigi**
**Via E. de Amicis No. 25**
**I-20123 Milano(IT)**

(54) **Self-centering bar guide device.**

(57) A self-centering guide device for feeding bars to
a spindle of a machine tool, by which circular bars or
polygonal bars (13, 13a) of different cross-width di-
mensions can be fed, maintaining them coaxially
aligned to the spindle. The device comprises at least
first and second guide jaws (16, 17) for supporting
and sliding the bars (13, 13a), said jaws (16, 17)
being adjacent to each other and circumferentially
arranged around the bar to be fed; the jaws (16, 17)
comprise semicircular guide surfaces (16a, 17a) and
are provided on pivotable arms (21, 22) which can
rotate around pivotal axes (15', 15'') circumferentially
arranged around the spindle axis, and control means
(23, 25) to simultaneously rotate said pivotable arms
(21, 22) in the same rotational direction moving said
guide jaws (16, 17) between an open condition and
respectively a closed position for guiding said bar
(13, 13a).

FIG. 4

Rank Xerox (UK) Business Services
(-/2.19/2.0)

The present invention relates to a bar guide device for feeding circular or polygonal bars to the spindle of a machine tool, such as a lathe or the like, in which the bars are guided by a set of adjacent guide jaws, having semicircular guide surfaces parallely arranged to the longitudinal axis of the spindle, in order to support and guide the bars to be fed, and in which the jaws are pivotable and reciprocally movable to allow a self-centering action and a guide effect for bars having different cross-sectional dimensions.

A device for guiding bars, of the type cited above, is known for example from EP-A- 0384344 of the same applicant comprising two opposite groups of guide jaws which can be reciprocated between closed and an open conditions, and in which the jaws have semicircular bar guide surfaces, and in which the jaws of one group are intercalated or staggered in relation to the jaws of the other group, and control means to inwardly and downwardly reciprocate one group of jaws to and from the other so as to maintain the guide surfaces coaxially arranged to the bar to adapt each time the jaws disposition to guide bars of different diameters or different dimensions. This bar guide device is particular suitable for guiding bars which are medium or small in diameter, as well as bars or cut down sizes of bars having relatively low in weight, since guiding and supporting the bars by two superimposed jaws groups does not allow high rotation speeds to be reached, or bars of considerable weight to be suitably guided and supported during rotation causing noise and vibrations; the use of supplemental centering means is therefore suggested to prevent lateral movement of the bars at both ends. Moreover, in this patent application an extremely complex control system for the jaws is proposed, which is difficult to adapt in order to form guide systems which require a different arrangement or function of the jaws for guiding and sliding bars of different cross-sectional dimensions and lenght.

From EP-A- 213 659 of the applicant a device for guiding bars is likewise known, in which two sets of semicircular guide jaws are provided, adjacent to each other and arranged on two lateral sides of the bar. The jaws on one side are fixed to plates fastened to a rotating drum while the jaws on the other side are pivotally supported by the same plates to be movable with respect to the previous ones, and being supported in a frontally juxtaposed condition without the possibility of change the relative disposition or spacing between the jaws of both groups. Although the use of pivotable jaws is simpler in functional and constructional terms, the arrangement of the jaws in this devise, and of the single rotational axis, therefore do not allow bars of different dimensions or of different diameters to be supported and guided.

Making both groups of jaws in this device rotate still does not provide an adequate solution to the problem of obtaining a guide device which is both self-centering and which at the same time adapts in order to also guide bars which are large in diameter, supporting and guiding them in several points of a same circumference; in fact the arragement of the axes would be such as to bring the bars off centre as they rotate.

The object of the present invention is to provide a self-centering guide device for supporting and feeding bars to a spindle of a machine tool, which is simple in constructional and at the same time adopts jaws which can be angularly positioned to allow bars of different dimensions or different diameters to be properly supported and guided, without causing vibrations and noise during rotation.

A further object of the invention is to provide a guide device as related above, which also enables bars of large dimensions to be supported and guided, holding them in two or more circumferentially spaced positions, still maintaining the advantageous self-centering characteristics of the bar-guide device mentioned above.

These and other objects and advantages of the invention can be achieved by a bar-guide device according to the main claim. Other characteristics are defined in the dependent claims.

The innovative features of the bar-guide device according to the present invention, together with some embodiments, are to be illustrated in greater detail hereinunder, with reference to the figures of the accompanying drawings, in which:

Fig. 1 is a schematic top view of part of a bar feeder comprising a guide device according to the present invention;

Fig. 2 shows a first solution of the guide device, in a first operative condition for guiding bars of maximum size;

Fig. 3 is a top view of the device in fig. 2;

Fig. 4 shows the device in figure 2, in a second operative condition for guiding bars of minimum diameter;

Fig. 5 shows a second solution for guiding bars on four sides, in a first operative condition;

Fig. 6 is a top view along line 6-6 of figure 5;

Fig. 7 is a view similar to the one in figure 5 in a second operative condition for guiding bars of smaller diameter;

Fig. 8 shows the guide device of figures 5 and 7 in a third operative or open condition for the loading of a new bar to be fed;

Fig. 9    shows a third solution comprising an uneven number of jaws or sets of jaws;

Fig. 10   represents schematically a solution which is similar to the one in figure 2, with the possibility of differently positioning the jaws in each guide unit of the feeder.

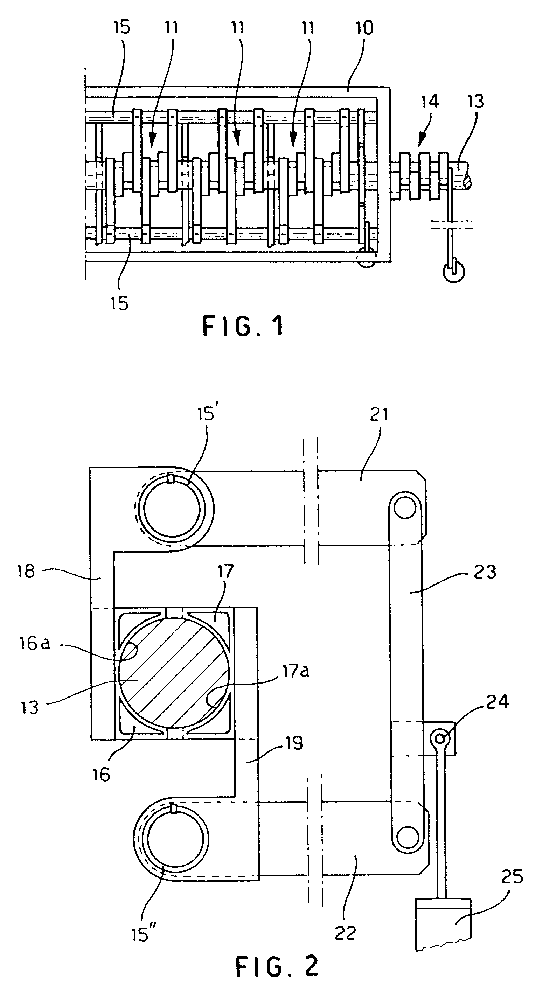

Figure 1 shows the end portion of a generical bar feeder comprising a guide device according to the present invention. The feeder in general comprises a frame 10 provided with one or more guide units 11 for supporting and axially guiding a bar 13 towards the spindle of a machine tool, not shown, and also comprises an external guide unit 14 at the end of the frame 10 which is turned towards the machine tool.

15 in Figure 1 denotes moreover the rotation shafts for two different sets of jaws 16, 17 which provide the guide assembly of the feeder, said shafts 15 comprising tubular elements 15', 15" (Fig. 2) appropriately supported by bearings or bushes in order to rotate in different angular positions, the guide jaws of the various units 11, according to the diameter of the bars 13 to be fed; the shafts 15', 15" are connected to appropriate control means 25, as explained hereinunder.

According to the general principles of the present invention, the bar guide device or each guide unit 11 of the guide device may comprise two or more adjacent and parallely arranged guide jaws 16, 17 having semicircular guide surfaces 16a, 17a which are peripherally arranged around a portion of the bar 13 to be fed and which restrain it circumferentially so as to allow it to rotate and to slide freely. Optionally, the semicircular guide surface 16a, 17a in each jaw of the device may extend for an arc of a circle whatsoever which is equal to or smaller than 180°, whose radius may in any case be chosen and which, as a general rule, must correspond to or be greater than the radius of the maximum diameter of the bars to be fed as intended for that specific device. Therefore the guide device or each guide unit 11 of the device may comprise an even or uneven number of guide jaws, juxtaposed and parallely adjacent to each other which are angularly spaced so as to surround the outline of the bar, or a multiple of this number, maintaining a circumferential arrangement of the pivotal axes of the jaws in each individual group, or of the entire device, along a circle concentric to the axis of the spindle of the machine tool. In order to ensure an appropriate self-centering action of the individual guide jaws, and to maintain the sliding axis of the bar constantly aligned with the axis of the spindle, independently of the cross-width dimensions of the bars, or of the angular positions assumed by the jaws themselves, the rotational or pivotal axes of the jaws preferably should be angularly spaced apart for a distance equal or corresponding to that of the jaws, that is to the contact points with the bar. The pivotal axis of each individual jaw may assume any angular arrangement whatsoever in relation to the jaw itself, provided that it is situated on a circle whose radius is greater than that of the semicircular guide surfaces for each individual jaw. The pivotal axis of the jaw or of each jaw of the guide unit is preferably positioned in a plane which passes through the spindle axis (which coincides with the sliding axis of the bar to be fed) and which is orthogonal to the plane passing through said sliding axis of the abovementioned bar and the intermediate contact point between the circular guide surface of the jaw, for the bars of maximum diameter to be fed.

In the case whereby the device comprises several guide units which are adjacent to each other or spaced along the sliding axis of the bar, the positioning of each unit of jaws may remain unchanged or be identical, or else a unit of jaws may be differently positioned in an angular direction, in relation to a unit or adjacent units of the guide device. The self-centering action to maintain the coaxiality of the axes of the guide device and of the machine tool spindle is ensured by the thrusts or the forces exerted by the individual jaws, of the device or of each unit of the device, which are always oriented towards a common centre which coincides with the sliding axis of the bar; in this way the thrust effects or the reactions of the jaws, whatever their angular position or operative condition may be, are compensated as a function of the diameter or cross-width dimensions of the bars to be fed.

Figures 2, 3 and 4 show a first solution of the guide device according to the invention, particularly suitable for the external guide unit 14 of the feeder.

As illustrated, the guide assembly in figure 2, in its simplest form, is basically composed of two opposite jaws 16 and 17 having semicircular guide surfaces 16a and 17a whose radius of curvature corresponds to the maximum radius of the bars 13 to be fed, or to the maximum circle in which the cross-width section of a polygonal bar may be inscribed.

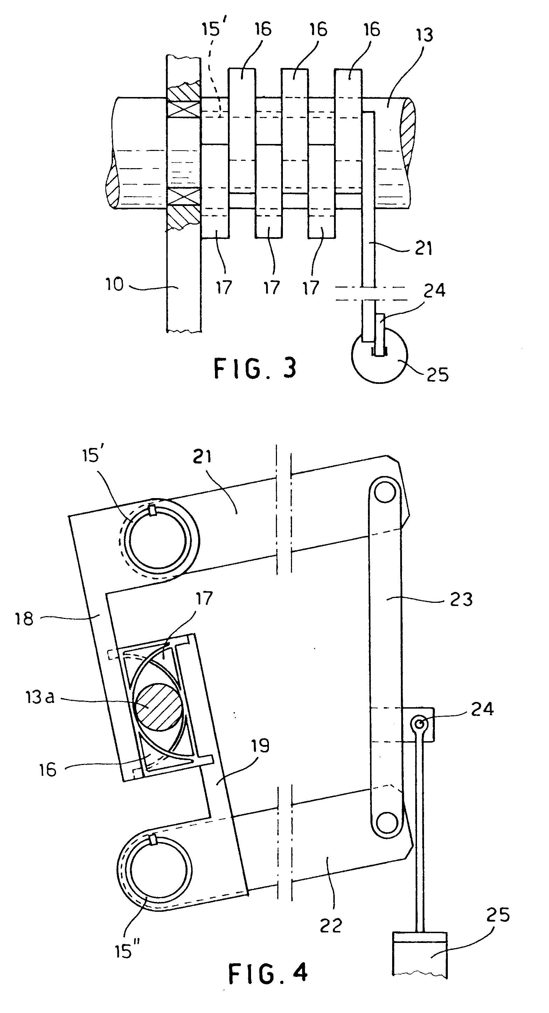

The guide jaws 16, 17 are parallely arranged adjacent to each other, in different planes, and are partially overlapping, as shown in figures 2 and 3 where, merely by way of an example, three pairs of guide jaws 16 and 17 are shown adjacent to each other in a guide unit.

The guide jaws 16 which are on one side of the bar 13 are connected to respective pivotal arms 18 in order to rotate together with a rotational shaft provided by a tubular element 15' and likewise the other jaws 17, opposite the previous ones, are attached to respective pivotal arms 19 connected in order to rotate with a second shaft which is also composed of a tubular element 15'' supported with the former one in a rotary manner by the structure 10 of the feeder.

According to a characteristic of the present invention, as shown in figure 2, the axes of the two rotational shafts 15' and 15'' are arranged along a circle which is concentric with sliding axis of the bar 13 which in turn must always coincide with the axis of the machine tool spindle; moreover these shafts 15', 15'' are on opposite sides of the jaws 16, 17 so that their axes lie in a plane passing through the sliding axis of the bars.

The angular spacing of the rotational shafts 15' and 15'' of the jaws 16 and 17 is of utmost importance since it preferably must coincide with the same angular spacing between the cross plane of symmetry of the jaws in order to maintain the sliding axis of the bars 13 constantly centred in the same position in relation to the spindle of the machine tool, independently of the diameter of the bars 13; in fact a different angular disposition between the shafts 15' and 15'' would lead to dissymmetry of the contact points of the bar with the jaws and hence to a possible lateral displacement of the sliding axis thus causing the bars to become disaligned.

These characteristics of the guide device according to the present invention are clear by comparing figure 3, in which the jaws 16, 17 are positioned in order to guide a bar of maximum diameter, with figure 4 in which the jaws have been rotated and brought closer in order to guide a bar 13a which is smaller in diameter. It is clear that for bars of intermediate diameter, the jaws will assume positions which are intermediate between the extreme positions of figure 2 and figure 4, to define guide channels of different widths, always maintaining the guide axis centered with the spindle of the machine, or a coplanar arrangement of the rotational axes of the shafts 15' and 15'' and of the sliding axis of the bars, as in the example shown.

In order to achieve this coaxiality between the guide device and the machine tool spindle, independently of the angular position which the guide jaws may assume while being adjusted, and in order to achieve at the same time a self-centering action which ensures the required coaxiality, control means have been provided to actuate jointly both jaws in each unit or both sets of jaws which compose guide device, by means of which a simultaneous clockwise and/or counterclockwise rotation of all jaws or of each set of jaws of the guide units is brought about in the same angular direction, to move said jaws between an open position and differant closed positions in relation to the cross-sectional dimensions of the bars.

These control means may however be composed of and may use any source of power, be it hydraulic, pneumatic, electric or combinations of these. In the case shown in figure 1 - 4, the arms 18 and 19 of the jaws, or the rotation shafts 15' and 15'' are integral with two lever arms 21 and 22 which extend on the one same side of the jaws, and which are jointed to an intermediate link rod 23; the link rod 23 in one of its intermediate point is linked at 24 to the end of a rod of a drive cylinder 25 or another suitable linear actuator.

In place of the lever arms 21 and 22 and of the intermediate link rod 23 driven by the cylinder 25, any other drive means could be provided, for example using gear wheels or sector gear, interconnected to rotate with the shafts 15' and 15'' again driven by a hydraulic or pneumatic cylinder, or a suitable drive motor; the gear wheels or sector gears engage with each other directly or indirectly by an appropriate kinematic transmission, or by means of chains, belts, cogged belts etc. The device in figure 2, as mentioned previously, comprises a pair of opposite and staggered guide jaws 16, 17 which could be doubled or multiplied for the required number of times in order to obtain the necessary guide length. This solution is to be preferred as being suitable for use as an external guide 14 on two sides of the bars.

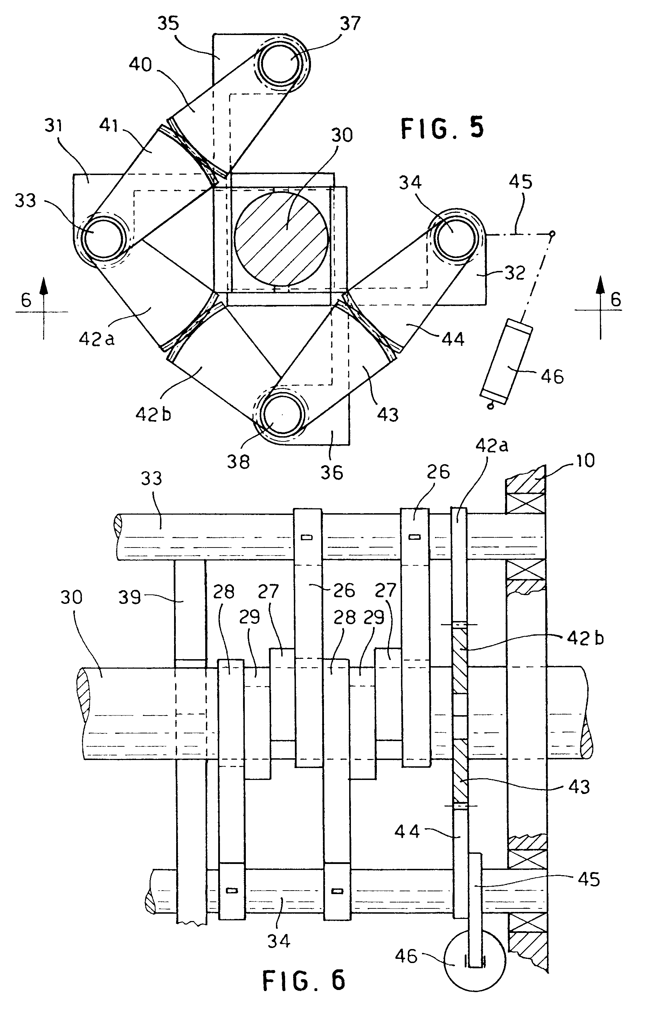

With reference to the remaining figures 5, 6, 7 and 8, we will illustrate a second solution which again makes use of the same innovative principles of the present invention, but which enables the bars to be guided on four sides, in this way ensuring a larger guide surface and hence better guiding of the bars themselves, as well as lateral loading of a new bar to be fed; in fact the arrangement shown enables the guide jaws to be opened fully in order to insert a bar 30 or load it from a side as illustrated hereinbelow.

The difference between the device in figure 2 and that in figure 5 mainly consists in the use of four jaw unit, or a multiple of four jaws, in each unit, in place of two, with pairs of opposite jaws, arranged in orthogonal directions, so as to provide a larger guide surface which is approaching to a circular guide surface, even for smaller diameters of the bars. In this way greater bar guiding stability is achieved also for bars of larger dimensions which may therefore be made to rotate at a higher number of revolutions without causing vibrations and excessive noise.

In this case too the rotational shafts of the jaws are arranged pairs of opposed shafts, in orthogonal planes again passing through the sliding axis of the bars, or having angular spacing which are similar to those of the guide jaws.

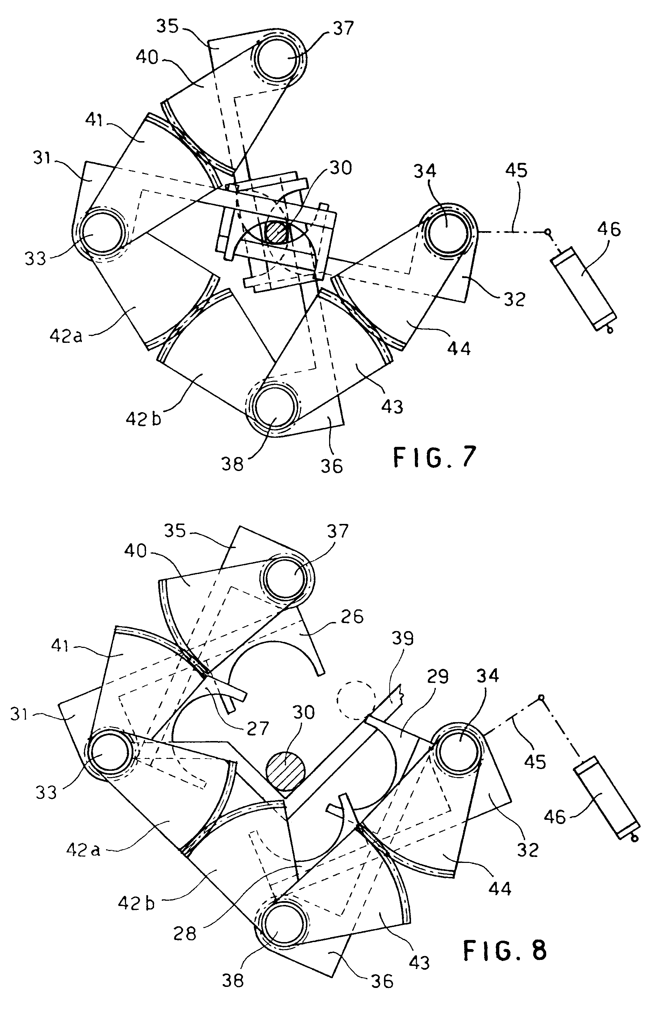

The position of the rotational shafts and their distance from the jaws may be such as to make these shafts perform the additional function of stopping means for the jaws in the condition of maximum opening of figure 8, to insert or load a new bar to be fed; since the overall dimensions of the jaws may not allow bars with a large diameter of transverse dimensions to be inserted, the rotational shafts can be further spaced away, maintaining their symmetrical arrangement as related previously, in order to enable the jaws to rotate beyond the shafts, in this case increasing the width of the lateral opening for inserting the bars.

More particularly the guide device in figures 5-8 comprises four jaws 26, 27, 28 and 29 which are completely identical to the jaws of the previous example, adjacent and arranged in staggered planes, parallel to each other. More particularly, the jaws 26 and 28 are arranged on two opposite sides in relation to the bar 30, while jaws 27 and 29 are opposite each other on the sides lying in a plane orthogonal to the previous one.

Therefore, in a similar manner to the previous example, the jaws 26 and 28 are connected by means of arms 31 and 32 to respective rotational shafts 33 and 34 whose longitudinal axes lie in the same plane which passes through the sliding axis of the bar 30, while the remaining two jaws 27 and 29 are connected by arms 35 and 36 to respective rotational shafts 37 and 38 whose axes lie in a plane which again passes through the sliding axis of the bar 30 but is arranged orthogonally to the plane of the shafts 33 and 34 mentioned previously. The guide device is also provided with control means which enable all the jaws to rotate or reciprocate simultaneously in opposite directions so as to close or open the jaws fully, forming a lateral opening (Fig. 8) in order to insert a bar 30 from the side, for example by means of chutes or tiltable planes 39, also enabling the jaws to be closed in an adjustable manner for guiding bars of different diameters as shown by way of an example in figures 5 and 7 in the accompanying drawings.

In the case shown, the control means comprises a set of sector gears 40, 41, 42a, 42b, 43 and 44, rotatably connected to shafts denoted respectively by 37, 33, 38 and 34; the sector gears engage in pairs reciprocally so as to cause the simultaneous rotation of pair of jaws of the unit alternately in opposite directions. One of the jaws or one of the sector gears, or one of the shafts may be suitably connected, by means of a lever 45, to a control means 46 such as a pneumatic cylinder, hydraulic cylinder, a linear actuator or other suitable drive means. For example, in place of the sector gears, gear wheels or kinematic or lever mechanisms of another kind could be used, comprising chain or belt transmissions or the like, provided that they are suited to causing the simultaneous or reciprocal rotation of the various jaws in the unit.

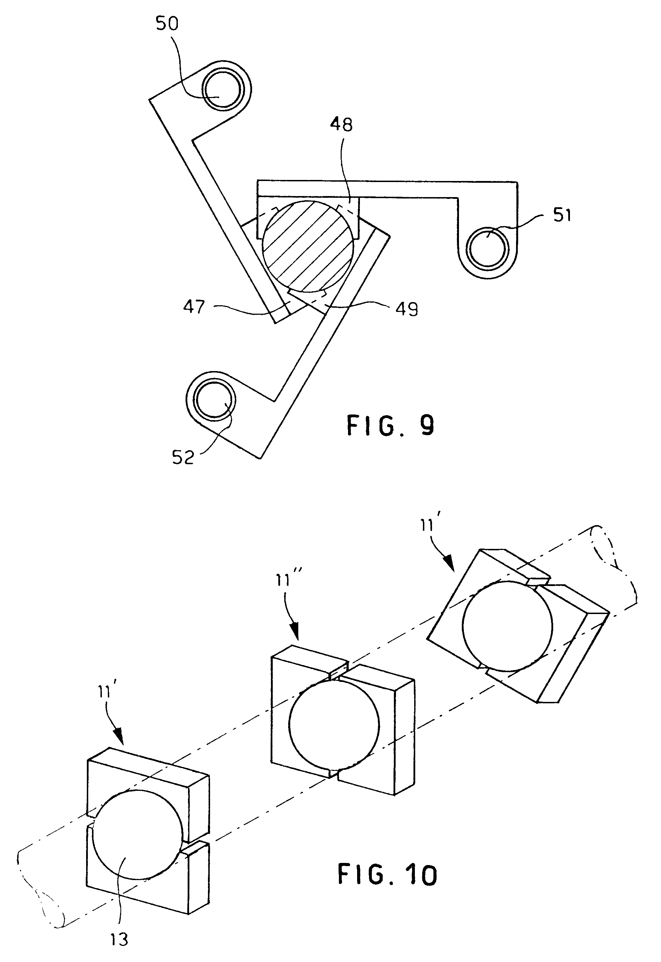

The previous figures show two examples of guide units composed of two and four jaw sets respectively, or their multiples; nevertheless, as stated previously, guide units can also be constructed which use an uneven number of jaws, or a multiple of them, for example three jaws angularly spaced apart by 120° and staggered in relation to each other according to the general principles of the present invention. This is shown by way of an example in figure 9.

In figure 9, 47, 48 and 49 denote the three jaws, while 50, 51 and 52 denote the relative rotational shafts, which are arranged along a same circle with the same triangular disposition of the jaws. In this way guiding on three areas is achieved for the bar, which is more similar to a circular guiding, compared to the case in figure 2. Naturally, by increasing the number of jaws having different angular arrangements, in each guide unit, or in each guide device, an helicoidal guiding surface is achieved, similar to tubular-shaped guiding means. This can be improved further by means of a different angular positioning of each guide unit, in relation to a guide unit or adjacent guide assemblies, as shown schematically by way of an example by 11' and 11'' in figure 10.

It is clear therefore that the explanations and illustrations with reference to the examples in the accompanying drawings have been given solely by way of an example and not limitatively of the general principles of the present invention.

## Claims

1. Self-centering bar guide device for feeding bars (13, 13a, 30) to the spindle of a machine tool said guide device comprising at least one guide unit (11) having side by side arranged and differently opposed guide jaws (16, 17; 26, 27, 28, 29; 47, 48, 49) to define a longitudinal guide channel for the bars (13, 13a, 30) axially aligned to said spindle, and control means (25, 46) to move said guide jaws (16, 17; 26, 27, 28, 29; 47, 48, 49) between an open condition and closed conditions to guide bars (13, 13a, 30) having different cross-sectional dimensions, **characterised in that** all said guide jaws (16, 17; 26, 27, 28, 29; 47, 48, 49) of said guide unit are pivotally supported to rotate between said open condition in which said opposed jaws (16, 17; 26, 27, 28, 29; 47, 48, 49) are spaced apart, and said closed conditions in which said opposed jaws (16, 17; 26, 27, 28, 29; 47, 48, 49) are partially overlapping each other, and linking means (21, 22, 23; 40, 41, 42a, 42b, 43, 44) to interconnect and to conjunctly reciprocate said jaws (16, 17; 26, 27, 28, 29; 47, 48, 49) in a same rotational direction between said open and closed conditions.

2. Guide device according to claim 1, **characterised in that** the rotational axes (15, 15''; 33, 34, 36, 37; 50, 51, 52) of the jaws (16, 17; 26, 27, 28, 29; 47, 48, 49) are angularly spaced in a same circular direction, in relation to respective guide jaws (16, 17; 26, 27, 28, 29; 47, 48, 49).

3. Guide device according to claim 1, **characterised in that** said guide jaws (16, 17; 26, 27, 28, 29; 47, 48, 49) comprise semicircular guide surfaces extending for an arc of a circle equal to or smaller than 180°.

4. Guide device according to claim 1, **characterised in that** said guide jaws (16, 17; 26, 27, 28, 29; 47, 48, 49) are angularly arranged and axially spaced in relation to each other to define contact points for guiding a bar arranged along a helicoidal line.

5. Guide device according to claim 1 **characterised by** comprising in a same guide unit of the device, at least a first pair of opposite guide jaws (26, 28) and a second pair of opposite guide jaws (27, 29) having a different angular disposition, and control means (40, 41, 42a, 42b, 43, 44) interconnecting said guide jaws to conjunctly reciprocate the jaws (26, 28) of said first pair in a first rotational directions, respectively to reciprocate the jaws (27, 29) of said second pair in a second rotation direction which is opposite to the former one.

6. Guide device according to claim 1, **characterised by** comprising stop means for stopping the jaws (16, 17; 26, 27, 28, 29; 47, 48, 49) in said open condition.

7. Guide device according to claim 6, **characterised in that** said jaws (16, 17; 26, 27, 28, 29; 47, 48, 49) are connected to rotational shafts (15' 15''; 33, 34, 36, 37; 50, 51, 52) and in that the spacing between said shafts and their arrangement in relation to the sliding axis of the bars is such as to allow said jaws (16, 17; 26, 27, 28, 29; 47, 48, 49) to rotate beyond said rotational shafts (15', 15''; 33, 34, 36, 37; 50, 51, 52).

FIG. 1

FIG. 2

FIG. 3

FIG. 4

FIG. 5

FIG. 6

**FIG. 7**

**FIG. 8**

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4 967 579 (HAYDO) | 1 | B23B13/12 |
| A | * column 3, line 39 - column 4, line 43; figures 1-3 * | 2,3,7 | B23B31/12 |
| | --- | | |
| D,Y | EP-A-0 384 344 (CUCCHI) | 1 | |
| A | * column 3, line 47 - column 4, line 2 * | 6 | |
| | * column 4, line 53 - line 58; figures 3-5 * | | |
| | --- | | |
| A | CH-A-121 387 (MEIER) | | |
| | --- | | |
| A | US-A-4 058 036 (AUSTIN) | | |
| | --- | | |
| A | GB-A-356 917 (HAHN) | | |
| | --- | | |
| A | FR-A-2 437 903 (CUCCHI) | | |
| | ----- | | |
| | . | | |
| | | | TECHNICAL FIELDS SEARCHED (Int. Cl.5 ) |
| | | | B23B |
| | | | B23Q |
| | | | B21D |

The present search report has been drawn up for all claims

| Place of search | Date of completion of the search | Examiner |
|---|---|---|
| THE HAGUE | 21 FEBRUARY 1992 | BOGAERT, F.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)